# FASCICULE DE BREVET EUROPEEN

(11) **EP 3 134 454 B1**
(45) Date de publication et mention de la délivrance du brevet: **20.11.2019**
(21) Numéro de dépôt: 15718553.9
(22) Date de dépôt: 09.04.2015
(51) Int. Cl.: C08G 59/42, C08G 59/68

(54) **COMPOSITION POUR LA FABRICATION DE RESINES VITRIMERES DE TYPE EPOXY/ANHYRIDE COMPRENANT UN CATALYSEUR ORGANIQUE**
ZUSAMMENSETZUNG ZUR HERSTELLUNG VON EPOXID-/ANHYDRID-VITRIMERHARZEN MIT EINEM ORGANISCHEN KATALYSATOR
COMPOSITION FOR MANUFACTURING EPOXY/ANHYDRIDE VITRIMER RESINS INCLUDING AN ORGANIC CATALYST

(30) Priorité: 24.04.2014 FR 1453676
(43) Date de publication de la demande: 01.03.2017
(73) Titulaire: Arkema France, 92700 Colombes (FR)
(72) Inventeur: DUQUENNE, Christophe, 75010 Paris (FR); MELAS, Michel, 69250 Montanay (FR); GENTILHOMME, Philippe, 60870 Brenouille (FR); DISSON, Jean-Pierre, 69390 Vernaison (FR)
(74) Mandataire: Bonnel, Claudine
(86) Numéro de dépôt international: PCT/FR2015/050951
(87) Numéro de publication internationale: WO 2015/162352

(56) Documents cités:
- JP-A- 2006 213 823
- US-A- 6 124 381
- US-A1- 2004 220 380
- US-A1- 2012 208 925
- M. Capelot, Miriam M. Unterlass, François Tournilhac, Ludwik Leibler: "Catalytic Control of the Vitrimer Glass Transition", ACS Macro Letters, 11 juin 2012 (2012-06-11), XP002733960, Extrait de l'Internet: URL:http://pubs.acs.org/doi/pdfplus/10.102 1/mz300239f [extrait le 2014-12-18] cité dans la demande
- Zhiqiang Pei,Yang Yang,Qiaomei Chen,Eugene M. Terentjev,Yen Wei & Yan Ji: "Mouldable liquid-crystalline elastomer actuators with exchangeable covalent bonds", Nature Materials - Letter, vol. 13 1 décembre 2013 (2013-12-01), pages 36-41, XP002733961, DOI: 10.1038/nmat3812 Extrait de l'Internet: URL:http://www.nature.com/nmat/journal/v13 /n1/full/nmat3812.html [extrait le 2014-12-18]

## Description

### DOMAINE DE L'INVENTION

La présente invention se rapporte à une composition renfermant, outre une résine thermodurcissable de type époxy et un durcisseur de type anhydride, au moins un catalyseur organique d'effet vitrimère. Cette composition permet la fabrication de résines vitrimères, c'est-à-dire de résines déformables à l'état thermodurci.

### ARRIERE-PLAN TECHNIQUE

Les résines thermodurcies (ou thermodurs) ont l'avantage de présenter une résistance mécanique, thermique et chimique élevée et pour cette raison peuvent remplacer les métaux dans certaines applications. Elles ont l'avantage d'être plus légères que les métaux. Elles peuvent aussi être employées comme matrices dans des matériaux composites, comme adhésifs, et comme revêtements. Parmi les polymères thermodurs, on peut citer les polyesters insaturés, les phénoplastes, les polyépoxydes, les polyuréthanes, les aminoplastes.

Les résines thermodurcissables classiques doivent être mises en oeuvre, en particulier elles doivent être moulées, de façon à obtenir d'emblée la forme adéquate pour l'utilisation finale. En effet, aucune transformation n'est plus possible une fois que la résine est polymérisée, ou thermodurcie, hormis l'usinage qui reste souvent délicat. Les pièces souples ou dures et les composites à base de résines thermodurcissables ne sont ni transformables ni façonnables, ils ne peuvent pas être recyclés ni soudés.

Parallèlement aux résines thermodurcissables, une classe de matériaux polymères, les thermoplastiques, a été mise au point. Les thermoplastiques peuvent être mis en forme à haute température par moulage ou par injection mais ont des propriétés mécaniques et de résistance thermique et chimique moins intéressantes que celles des résines thermodurcies.

En outre, la mise en forme des thermoplastiques ne peut être réalisée que dans des gammes de température très étroites. En effet, lorsqu'ils sont chauffés, les thermoplastiques deviennent des liquides dont la fluidité varie abruptement au voisinage des températures de fusion et de transition vitreuse, ce qui ne permet pas de leur appliquer toute une variété de méthodes de transformation qui existent pour le verre et pour les métaux, par exemple. Les résines thermoplastiques fondues ont cependant des viscosités généralement trop élevées pour se prêter à l'imprégnation de tissus en vue de l'obtention de matériaux composites.

US 6 124 381 divulgue une composition époxyde - acide anhydride comprenant une triazine substituée tant que catalyseur et un anhydride d'acide carboxylique en tant qu'agent durcisseur.

Dans ce contexte, les résines vitrimères ont été conçues dans le but d'allier à la fois les avantages des thermodurs et des thermoplastiques. Ces matériaux présentent à la fois les propriétés mécaniques et de résistance aux solvants des résines thermodurcies, et la capacité à être refaçonnés et/ou réparés des matériaux thermoplastiques. Ces matériaux polymères qui sont capables de passer indéfiniment d'un état solide à un liquide viscoélastique, comme le verre, ont été désignés par "vitrimères". Contrairement aux thermoplastiques, la viscosité des vitrimères varie lentement avec la température, ce qui permet de les utiliser pour la fabrication d'objets ayant des formes particulières incompatibles avec un procédé de moulage, sans utiliser de moule ni contrôler précisément la température de mise en forme.

Les propriétés particulières des vitrimères sont liées à la capacité de leur réseau à se réorganiser au-delà d'une certaine température, sans modifier le nombre de liaisons intramoléculaires ni se dépolymériser, sous l'effet de réactions d'échange interne. Ces réactions entraînent une relaxation des contraintes au sein du matériau qui devient malléable, tout en conservant son intégrité et en restant insoluble dans tout solvant. Ces réactions sont rendues possibles par la présence d'un catalyseur. Dans le cas des vitrimères de type époxy-anhydride, obtenus à partir d'une résine thermodurcissable de type époxy et d'un durcisseur de type anhydride, il a été suggéré d'utiliser comme catalyseur un sel métallique de zinc, d'étain, de magnésium, de cobalt, de calcium, de titane ou de zirconium, de préférence l'acétylacétonate de zinc (WO 2012/101078). De même, différents catalyseurs ont été suggérés pour une utilisation dans des systèmes hybrides thermodurs/supramoléculaires obtenus à partir d'une résine thermodurcissable, d'un durcisseur de type anhydride ou de préférence de type acide et d'un composé comprenant un groupe associatif et une fonction permettant son greffage sur la résine thermodurcissable (WO 2012/152859). Ces catalyseurs peuvent être de nature organique ou inorganique et il peut notamment s'agir du triazabicyclodécène (TBD), bien que l'acétylacétonate de zinc soit, là encore, préféré. Il a en outre été proposé d'utiliser le TBD comme catalyseur dans des systèmes à base de résine époxy et durcisseur acide (M. CAPELOT et al., ACS Macro Lett. 2012, 1, 789-792). Dans cette application, le TBD est utilisé à hauteur de 5% molaire par rapport au nombre de moles de fonctions époxy dans la résine thermodurcissable. Rien ne permettait de penser que ce catalyseur pouvait être utilisé dans un système à base de résine époxy et de durcisseur de type anhydride et non acide, dans la mesure où les réactions au sein de ces deux systèmes sont très différentes et conduisent notamment à un réseau diester et à des hydroxy-monoesters, respectivement. En outre, il n'était pas prévisible que ce catalyseur pouvait être utilisé dans les systèmes à base de durcisseur de type anhydride en quantité bien plus faible que dans les systèmes à base de durcisseur de type acide. De plus le TBD a un point d'ébullition de 125-130°C, et on aurait attendu que son incorporation dans un système époxy-anhydride s'accompagne de limitations dans la température d'utilisation, sous peine de voir apparaître des fissures, des bulles, ou des déformations.

Or, les inventeurs ont démontré que l'utilisation de TBD comme catalyseur dans les systèmes époxy-anhydrides permettait d'obtenir des matériaux présentant des propriétés vitrimères améliorées par rapport aux matériaux obtenus à partir d'acétylacétonate de zinc, en ce sens que les contraintes développées au sein des matériaux étaient relaxées de manière plus complète et plus rapide et ce, à des taux de catalyseur plus faibles. Les matériaux obtenus en utilisant le TBD présentent ainsi de meilleures propriétés de déformation, qui sont plus compatibles avec un procédé industriel de thermoformage, lequel requiert une déformation et une relaxation des contraintes très rapides aux cadences industrielles utilisées.

En outre, cette aptitude à la déformation n'est pas obtenue au détriment de la densité de réticulation, et donc des propriétés mécaniques du matériau, qui peuvent par ailleurs être modulées en ajustant le taux de TBD.

De plus, un autre inconvénient de l'acétylacétonate de zinc est le fait qu'aux températures (de 250 à 350°C) requises pour la transformation, ce catalyseur n'est pas suffisamment stable, ce qui provoque des dégagements gazeux lors des manipulations à chaud du matériau, se traduisant par une perte de masse mesurée notamment par analyse thermogravimétrique (ATG). Il a été observé que le TBD présentait une meilleure stabilité thermique que l'acétylacétonate de zinc.

### DEFINITIONS

Par résine « thermodurcissable », on entend un monomère, oligomère, prépolymère, polymère ou toute macromolécule apte à être réticulé chimiquement. On entend plus préférentiellement un monomère, oligomère, prépolymère, polymère ou toute macromolécule apte à être réticulé chimiquement lorsqu'il est mis à réagir avec un durcisseur (encore appelé réticulant) en présence d'une source d'énergie, par exemple de chaleur ou de rayonnement, et éventuellement d'un catalyseur.

Par résine « thermodurcie » ou « à l'état thermodurci », on entend une résine thermodurcissable réticulée chimiquement de sorte que son point de gel soit atteint ou dépassé. Par "point de gel", on entend le degré de réticulation à partir duquel la résine n'est quasiment plus soluble dans les solvants. Toute méthode classiquement utilisée par l'homme du métier pourra être mise en oeuvre pour le vérifier. On pourra par exemple mettre en oeuvre le test décrit dans la demande WO 97/23516 page 20. Une résine est considérée comme thermodurcie au sens de l'invention dès lors que son taux de gel, c'est-à-dire le pourcentage de sa masse résiduelle après mise en solvant relativement à sa masse initiale avant mise en solvant, est égal ou supérieur à 75 %.

Le terme « durcisseur » désigne un agent réticulant apte à réticuler une résine thermodurcissable. Il s'agit ici d'un composé généralement polyfonctionnel, porteur de fonctions anhydrides réactives capables de réagir avec des fonctions réactives portées par la résine.

Lorsqu'il est fait référence à des intervalles, les expressions du type « allant de ... à ... » incluent les bornes de l'intervalle. Les expressions du type « compris entre ... et ... » excluent les bornes de l'intervalle.

### RESUME DE L'INVENTION

L'invention a pour premier objet une composition comprenant au moins :
- un catalyseur comprenant, et de préférence constitué par, un composé de formule (I) : 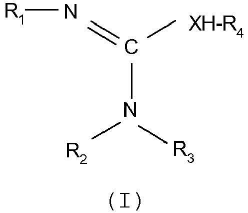 dans laquelle :
   X désigne un atome d'azote ou un groupe -CH-, de préférence X est l'atome N.
   R₁ désigne un atome d'hydrogène, un groupe alkyle en C₁-C₆ ou un groupe phényle pouvant être substitués par un groupe alkyle en C₁-C₄,
   R₂, R₃ et R₄ désignent indépendamment un atome d'hydrogène, un groupe alkyle en C₁-C₆, ou un groupe phényle pouvant être substitués par un groupe alkyle en C₁-C₄, ou un groupe acétyle,
   ou R₁ et R₂ forment ensemble et avec les atomes auxquels ils sont liés un hétérocycle saturé ou insaturé et/ou R₃ et R₄ forment ensemble et avec les atomes auxquels ils sont liés un hétérocycle saturé ou insaturé,
- une résine thermodurcissable comprenant au moins une et avantageusement plusieurs fonctions époxyde et optionnellement au moins une et avantageusement plusieurs fonctions hydroxyle libre et/ou ester, et un durcisseur de résine thermodurcissable choisi parmi les anhydrides d'acide carboxylique.

Le catalyseur ci-dessus sera désigné ci-après par "catalyseur organique d'effet vitrimère" ou "catalyseur d'effet vitrimère". Le catalyseur d'effet vitrimère facilite les réactions d'échange interne au sein d'une résine thermodurcie de façon à la rendre déformable. Il est entendu que ce catalyseur est présent, dans la composition de l'invention, en plus des catalyseurs susceptibles d'être déjà présents de façon intrinsèque dans la résine thermodurcissable et/ou dans le durcisseur, du fait de leur préparation pouvant être réalisée en présence de catalyseurs en faible teneur, ou en plus des catalyseurs classiques d'ouverture de cycle époxyde.

L'invention a également pour objet un kit pour la fabrication d'une telle composition, comportant au moins :
- une première composition comprenant le catalyseur, seul ou avec le durcisseur ou la résine thermodurcissable ;
- éventuellement une deuxième composition comprenant le durcisseur ;
- éventuellement une troisième composition comprenant la résine thermodurcissable.

Elle a en outre pour objet l'utilisation de la composition précitée pour la fabrication d'un objet en résine thermodurcie déformable à chaud, ainsi qu'un objet comprenant une résine thermodurcie obtenue à partir de la composition selon l'invention.

L'invention a encore pour objet un procédé de déformation d'un objet tel que défini ci-dessus, tel qu'un procédé d'assemblage, de soudage, de réparation ou de recyclage, comprenant l'application à cet objet d'une contrainte mécanique à une température (T) supérieure à la température de transition vitreuse Tg de la résine thermodurcie.

Elle a enfin pour objet l'utilisation d'un ou plusieurs objets tels que décrits ci-dessus dans les domaines de l'automobile, l'aéronautique, le nautisme, l'aérospatiale, le sport, le bâtiment, l'électrique, l'isolation électrique, l'électronique, l'éolien, l'emballage ou l'imprimerie.

### DESCRIPTION DETAILLEE

Comme indiqué précédemment, la composition selon l'invention renferme un catalyseur d'effet vitrimère, de formule (I) : 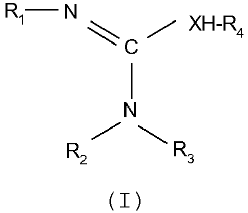 dans laquelle :
X désigne un atome d'azote ou un groupe -CH-,
R₁ désigne un atome d'hydrogène, un groupe alkyle en C₁-C₆ ou un groupe phényle pouvant être substitués par un groupe alkyle en C₁-C₄,
R₂, R₃ et R₄ désignent indépendamment un atome d'hydrogène, un groupe alkyle en C₁-C₆ ou un groupe phényle pouvant être substitués par un groupe alkyle en C₁-C₄, ou un groupe acétyle,
ou R₁ et R₂ forment ensemble et avec les atomes auxquels ils sont liés un hétérocycle saturé ou insaturé et/ou R₃ et R₄ forment ensemble et avec les atomes auxquels ils sont liés un hétérocycle saturé ou insaturé,

On préfère que R₁ et R₂ forment ensemble et avec les atomes auxquels ils sont liés un hétérocycle saturé ou insaturé, de préférence insaturé, et en ce que R₃ et R₄ forment ensemble et avec les atomes auxquels ils sont liés un hétérocycle saturé ou insaturé, de préférence saturé.

On préfère que les groupes alkyle en C₁-C₆ ou phényle ne soient pas substitués et que les groupes R₁ et R₂ ne contiennent pas d'atome d'azote.

Des exemples de catalyseurs d'effet vitrimère utilisables dans la présente invention sont les suivants :

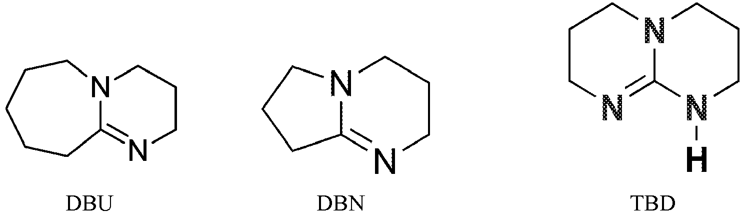

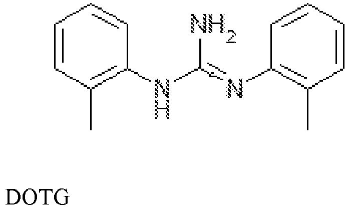

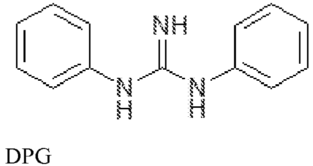

Ces catalyseurs pourront être désignés également par catalyseurs de type guanidine.

Préférentiellement, le catalyseur d'effet vitrimère est le triazabicyclodécène (TBD).

Selon un mode de réalisation de l'invention, le catalyseur représente de 0,1 à moins de 5% en mol, de préférence de 0,1 à 4% en mol, plus préférentiellement de 0,5 à 2% en mol, relativement à la quantité molaire de fonctions époxy contenues dans ladite résine thermodurcissable.

La composition selon l'invention comprend au moins un durcisseur de type anhydride d'acide carboxylique (comportant au moins une fonction -C(O)-O-C(O)-).

On peut notamment citer comme durcisseurs de type anhydride les anhydrides cycliques, comme par exemple l'anhydride phtalique, l'anhydride nadique ou méthylnadique, l'anhydride dodécénylsuccinique (DDSA), l'anhydride glutarique; les anhydrides aromatiques partiellement ou totalement hydrogénés comme l'anhydride tétrahydrophtalique, ou méthyltétrahydrophtalique, l'anhydride hexahydrophtalique ou méthylhexahydrophtalique; et leurs mélanges.

On peut encore citer comme durcisseurs de type anhydride, l'anhydride succinique, l'anhydride maléique, l'anhydride trimellitique, l'adduit d'anhydride trimellitique et d'éthylèneglycol, l'anhydride chlorendique, l'anhydride tétrachlorophtalique, le dianhydride pyromellitique (PMDA), le dianhydride d'acide 1,2,3,4 cyclopentanetétracarboxylique, les polyanhydrides d'acides aliphatiques tels que le polyanhydride polyazélaique, le polyanhydride polysébacique et leurs mélanges.

On peut notamment utiliser les anhydrides de formules suivantes, et leurs mélanges : 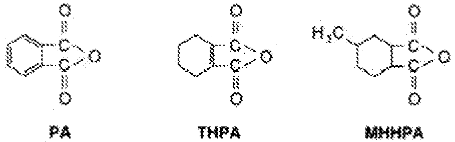 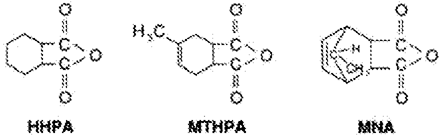 et plus préférentiellement le MTHPA.

On peut encore citer comme durcisseur de type anhydride le durcisseur de référence commerciale HY905 vendu par Huntsman, qui est un mélange liquide de plusieurs anhydrides.

Avantageusement, la quantité de durcisseur est telle que le nombre de moles de fonctions époxydes de la résine peut aller de 50 à 300%, de préférence de 100% à 200%, de préférence de 125 à 150 %, relativement au nombre de moles de fonctions anhydride du durcisseur.

La composition selon l'invention comprend au moins une résine thermodurcissable comportant au moins une et avantageusement plusieurs fonctions époxyde et optionnellement au moins une et avantageusement plusieurs fonctions hydroxyles libres et/ou fonctions ester. On désignera une telle résine par « résine époxy ».

De façon avantageuse, la résine époxy représente au moins 10 % en poids, au moins 20 % en poids, au moins 40 % en poids, au moins 60 % en poids, voire 100% en poids, du poids total de résine thermodurcissable présente dans la composition.

Il existe deux grandes catégories de résines époxy : les résines époxy de type glycidyle, et les résines époxy de type non glycidyle. Les résines époxy de type glycidyle sont elles-mêmes classées en glycidyle éther, glycidyle ester et glycidyle amine. Les résines époxy non glycidyle sont de type aliphatique ou cycloaliphatique. Les résines époxy glycidyle sont préparées par une réaction de condensation d'un diol, diacide ou diamine avec de l'épichlorhydrine. Les résine époxy non glycidyle sont formées par peroxydation des doubles liaisons oléfiniques d'un polymère.

Parmi les éthers époxy glycidyle, le diglycidyl éther de bisphénol A (DGEBA) représenté ci-dessous est le plus couramment utilisé.

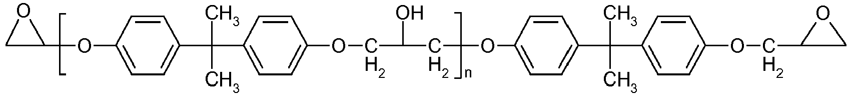

Les résines à base de DGEBA ont d'excellentes propriétés électriques, un faible retrait, une bonne adhérence sur de nombreux métaux et une bonne résistance à l'humidité, aux chocs mécaniques et une bonne résistance thermique.

Les propriétés des résines DGEBA dépendent de la valeur du degré de polymérisation n, qui lui-même dépend de la stoechiométrie de la réaction de synthèse. En règle générale, n varie de 0 à 25.

Les résines époxy Novolac (dont la formule est représentée ci-dessous) sont des glycidyléthers de résines phénoliques novolaques. Elles sont obtenues par réaction du phénol avec le formaldéhyde en présence d'un catalyseur acide pour produire une résine phénolique novolaque, suivie d'une réaction avec l'épichlorhydrine en présence d'hydroxyde de sodium comme catalyseur.

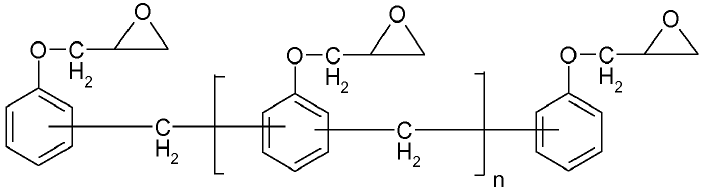

Les résines époxy Novolac contiennent généralement plusieurs groupes époxyde. Les multiples groupes époxyde permettent de réaliser des résines thermodurcies de haute densité de réticulation. Les résines époxy Novolac sont largement utilisées pour fabriquer des matériaux pour la microélectronique en raison de leur résistance supérieure à une température élevée, de leur excellente aptitude au moulage, et de leurs propriétés supérieures mécaniques, électriques, de résistance à la chaleur et à l'humidité.

La résine thermodurcissable utilisable dans la présente invention peut par exemple être choisie parmi : les résines époxy Novolac, le bisphénol A diglycidyl éther (DGEBA), le bisphénol A diglycidyl éther hydrogéné, le bisphénol F diglycidyl éther, le tétraglycidyl méthylène dianiline, le pentaérythritol tétraglycidyl éther, le triméthylol triglycidyl ether (TMPTGE), le tétrabromo bisphénol A diglycidyl éther, ou les hydroquinone diglycidyl éther, l'éthylène glycol diglycidyl éther, le propylène glycol diglycidyl éther, le butylène glycol diglycidyl éther, le néopentyl glycol diglycidyl éther, le 1,4-butanediol diglycidyl éther, le 1,6-hexanediol diglycidyl éther, le cyclohexanediméthanol diglycidyl éther, le polyéthylène glycol diglycidyl éther, le polypropylène glycol diglycidyl éther, le polytétraméthylène glycol diglycidyl éther, le résorcinol diglycidyl éther, le néopentylglycol diglycidyl éther, le bisphénol A polyéthylène glycol diglycidyl éther, le bisphénol A polypropylèneglycol diglycidyl éther, le diglycidyl ester d'acide téréphtalique, le poly(glycidyle-acrylate), le poly(glycidyle-méthacrylate), les acides gras polyinsaturés époxydés, les huiles végétales époxydées notamment l'huile de soja époxydée, les huiles de poissons époxydées, et le limonène époxydé; les glycidyl esters de l'acide versatique tels que ceux commercialisés sous la dénomination CARDURA® E8, E10 ou E12 par la société Momentive (CARDURA® E10 de CAS 26761-45-5) ; les résines cycloaliphatiques époxydées commercialisées sous la dénomination ARALDITE® CY179, CY184, MY0510 et MY720 par la société Huntsman, les résines CY179 et la CY184 répondant respectivement aux formules suivantes : 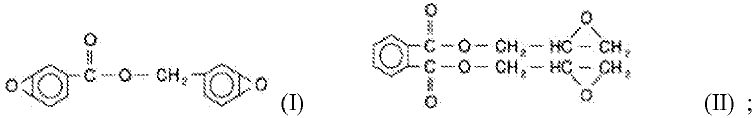 le triglycidyl isocyanurate (TGIC) ; le glycidyl méthacrylate, les glycidyl (méth)acrylates alkoxylés ; les C8-C10 alkyl glycidyl éthers, les C12-C14 alkyl glycidyl ethers, le glycidyl ester d'acide néodecanoïque, le butyl glycidyl éther, le crésyl glycidyl éther, le phényl glycidyl éther, le p-nonyphényl glycidyl éther, le p-nonylphényl glycidyl éther, le p-t-butyl phényl glycidyl éther, le 2-éthylhexyl glycidyl éther, le néopentyl glycol diglycidyl éther, le diglycidyl ester de dimère d'acide, le cyclohexane diméthanol diglycidyl éther, le polyglycidyl éther d'huile de riçin ; et les mélanges des résines précitées.

Avantageusement, elle est plus particulièrement choisie parmi : le DGEBA, le bisphénol F diglycidyl éther, les résines Novolac, le TMPTGE, le 1,4-butanediol diglycidyl éther, l'ARALDITE®CY184 de formule (II) ci-dessus, le TGIC, l'huile de soja époxydée et leurs mélanges. Plus préférentiellement encore, il s'agit du DGEBA.

Selon un mode de réalisation, la composition est constituée par le catalyseur d'effet vitrimère, le durcisseur, et une résine thermodurcissable époxy, tels que définis plus haut. Selon ce mode de réalisation, le nombre de moles de catalyseur peut aller de 0,1 à 10 %, de préférence de 0,5 à 5%, de préférence de 0,5 à 2 %, relativement au nombre de moles de fonctions anhydride. Le nombre de moles de fonctions époxydes de la résine peut aller de 50 à 300%, de préférence de 100% à 200%, de préférence de 125 à 150 %, relativement au nombre de moles de fonctions anhydride du durcisseur.

La composition de l'invention peut éventuellement comprendre un ou plusieurs composés additionnels, dans la mesure où leur présence n'altère pas les propriétés avantageuses qui découlent de l'invention. Des exemples de tels composés additionnels sont : des polymères, des pigments, des colorants, des charges, des plastifiants, des fibres longues ou courtes, tissées ou non, des agents retardateurs de flamme, des agents antioxydants, des lubrifiants, du bois, du verre, des métaux et leurs mélanges.

Avantageusement, la teneur en résine thermodurcissable et en durcisseur va de 10% à 90 % en poids, notamment de 20 % à 80 % en poids voire de 30 à 70 % en poids, relativement au poids total de la composition, le complément à 100 % étant apporté par le catalyseur et éventuellement par des composés additionnels choisis parmi les composés précités.

Parmi les polymères qui peuvent être employés en mélange avec la composition de l'invention, on peut mentionner : des élastomères, des thermoplastiques, des élastomères thermoplastiques, des additifs chocs.

Par pigments, on entend des particules colorées insolubles dans la composition de l'invention. Comme pigments utilisables selon l'invention, on peut citer l'oxyde de titane, le noir de carbone, les nanotubes de carbone, les particules métalliques, la silice, les oxydes métalliques, les sulfures métalliques ou tout autre pigment minéral, on peut également citer les phtalocyanines, les anthraquinones, les quinacridones, les dioxazines, les pigments azoïques ou tout autre pigment organique, les pigments naturels (garance, indigo, pourpre, cochenille, etc) et les mélanges de pigments.

Par colorants, on entend des molécules solubles dans la composition de l'invention et ayant la capacité d'absorber une partie du rayonnement visible.

Parmi les charges qui peuvent être employées dans la composition de l'invention, on peut mentionner les charges classiquement utilisées dans les formulations de polymères. On peut citer sans que cela soit limitatif : la silice, les argiles, le noir de carbone, le kaolin, le talc, le carbonate de calcium, les whiskers et leurs mélanges.

Parmi les fibres qui peuvent être employées dans la composition de l'invention, on peut mentionner : des fibres de verre, des fibres de carbone, des fibres polyester, des fibres polyamides, des fibres aramides, des fibres cellulosiques et nanocellulosiques ou encore des fibres végétales (lin, chanvre, sisal, bambou...) et leurs mélanges.

La présence, dans la composition de l'invention, de pigments, de colorants ou de fibres capables d'absorber le rayonnement, ou leurs mélanges, peut servir à assurer le chauffage d'un matériau ou d'un objet fabriqué à partir d'une telle composition, au moyen d'une source de rayonnement telle qu'un laser.

La présence, dans la composition de l'invention, de pigments, de fibres ou de charges conductrices de l'électricité tels que noir de carbone, nanotubes de carbone, fibres de carbone, poudres métalliques, particules magnétiques ou leurs mélanges, peut être utilisée pour assurer le chauffage d'un matériau ou d'un objet fabriqué à partir d'une telle composition, par effet Joule, par induction ou par micro-ondes. Un tel chauffage peut permettre la mise en oeuvre d'un procédé de fabrication, de transformation ou de recyclage d'un matériau ou d'un objet suivant un procédé qui sera décrit plus loin.

Les composés additionnels peuvent aussi être choisis parmi un ou plusieurs autres catalyseurs et/ou durcisseurs, de toutes natures connues de l'homme du métier comme jouant ces rôles dans la mesure ou ils n'altèrent pas les propriétés avantageuses découlant de l'invention. Ils seront désignés par « catalyseur supplémentaire » et « durcisseur supplémentaire ».

Selon une forme d'exécution préférée de l'invention, la composition décrite ici renferme en outre un ou plusieurs catalyseurs supplémentaires qui sont spécifiques de l'ouverture d'époxyde, tels que :
- les amines tertiaires, éventuellement bloquées, comme par exemple: le 2,4,6-tris(diméthylaminométhyl)phénol (par exemple commercialisée sous le nom Ancamine), o-(diméthylaminométhyl) phénol, la benzyldiméthylamine (BDMA), le 1,4-diazabicyclo(2,2,2)octane (DABCO), le chlorure de méthyltribenzyl ammonium.
- les imidazoles, comme les 2-méthylimidazole (2-MI), 2-phénylimidazole (2-PI), 2-éthyl-4-méthyl-imidazole (EMI), 1-propylimidazole, chlorure de 1-éthyl-3-méthylimidazolium, 1-(2-hydroxypropyl)imidazole.
- les phosphoniums : les halogénures de tetraalkyl et alkyltriphénylphosphonium.
- les sels d'amine de polyacides, les condensats aniline-formaldéhyde, les N,N-alcanolamines, les borates de trialcanolamines, les fluoroborates comme la monoéthylamine de trifluorure de bore (BF3-MEA), les phosphines organosubstituées, les sels de monoimidazoline quaternaire, des mercaptans, des polysulfures.
- et leurs mélanges.

Préférentiellement, le catalyseur d'ouverture d'époxyde est choisi parmi : les amines tertiaires, les imidazoles, et leurs mélanges.

Les amines (hétéro)aromatiques telles que la 2-méthylimidazole et le tris(diméthylaminométhyl)phénol sont plus particulièrement préférées pour une utilisation dans cette invention.

Ce catalyseur supplémentaire d'ouverture d'époxyde est avantageusement mis en oeuvre dans la composition à raison de 0,1% à 5% molaire par rapport au nombre de moles de fonctions époxydes portées par la résine thermodurcissable.

On peut aussi mettre en oeuvre un ou plusieurs catalyseurs supplémentaires d'effet vitrimère choisis parmi les catalyseurs cités dans les demandes WO2011/151584, WO2012/101078 et WO 2012/152859, toujours dans la mesure ou leur présence n'altère pas les propriétés avantageuses découlant de l'invention.

Le catalyseur supplémentaire d'effet vitrimère peut par exemple être présent dans la composition de l'invention à raison de 0,1 à 10 % en poids et de préférence de 0,1 à 5 % en poids relativement au poids total de la composition.

Par ailleurs, l'utilisation d'un durcisseur supplémentaire permet d'obtenir, pour les matériaux fabriqués *in fine,* une large gamme de propriétés mécaniques à la température ambiante (par exemple contrôle de la température de transition vitreuse et/ou du module d'une résine thermodurcie).

Comme exemples de durcisseurs supplémentaires, on peut mentionner les durcisseurs de résine époxy, en particulier ceux choisis parmi les aminés, les polyamides, les acides polycarboxyliques, les résines phénoliques, les anhydrides (éventuellement autres que ceux décrits ci-dessus comme durcisseurs acides), les isocyanates, les polymercaptans, les dicyanodiamides et leurs mélanges.

En particulier, un durcisseur supplémentaire de type amine peut être choisi parmi les amines primaires ou secondaires ayant au moins une fonction -NH₂ ou deux fonctions -NH et de 2 à 40 atomes de carbone. Ces amines peuvent par exemple être choisies parmi les amines aliphatiques telles que la diéthylène triamine, la triéthylène tétramine, la tétraéthylène pentamine, la dihexylène triamine, la cadavérine, la putrescine, l'hexanediamine, la spermine, l'isophorone diamine, ainsi que les amines aromatiques telles que la phénylène diamine, le diamino diphénylméthane, la diamino diphénylsulfone, la méthylène bischlorodiéthylaniline, la meta-xylylène diamine (MXDA) et ses dérivés hydrogénés tels que le 1,3-bis(aminométhyl cyclohexane) (1,3-BAC) ; et leurs mélanges.

Un durcisseur supplémentaire de type amine peut encore être choisi parmi les polyétheramines, par exemple les JEFFAMINES de Huntsman, éventuellement en mélange avec d'autres durcisseurs supplémentaires.

Comme durcisseurs supplémentaires préférés, on peut citer la diéthylène triamine, la triéthylène tétramine, l'hexanediamine, et leurs mélanges.

Selon une forme d'exécution préférée de l'invention, la composition décrite ici renferme en outre au moins un polyol, c'est-à-dire un composé comportant au moins deux fonctions hydroxyle, en particulier un polyhydroxyalcane linéaire ou ramifié, tel que le glycérol, le triméthylolpropane ou le pentaérythritol. Il a en effet été observé que l'ajout de ce composé au mélange réactionnel permettait d'améliorer encore les propriétés vitrimères du matériau, c'est-à-dire d'obtenir un matériau capable de relaxer plus complètement et plus rapidement les contraintes après application d'une déformation.

### Procédé de préparation de la composition

Les composés de la composition selon l'invention sont soit disponibles commercialement, soit facilement synthétisables par l'homme du métier à partir de matières premières disponibles commercialement.

La composition de l'invention peut être obtenue par simple mise en contact des composés qu'elle renferme. Cette mise en contact est de préférence effectuée à une température allant de 15°C à 130°C, notamment de 50°C à 125°C. La mise en contact peut être effectuée avec ou sans moyen d'homogénéisation.

Selon un mode de réalisation particulier, le procédé comprend une première étape au cours de laquelle le catalyseur d'effet vitrimère est préintroduit dans la résine ou le durcisseur, de préférence dans le durcisseur. Le catalyseur peut être alors sous forme de dispersion s'il s'agit d'une poudre, ou d'une solution. Cette dispersion ou mise en solution peut être effectuée à température ambiante ou à chaud pour obtenir les caractéristiques de viscosité souhaitées.

### Kits

La composition conforme à l'invention peut être préparée à partir d'un kit comportant au moins :
- une première composition comprenant le catalyseur, seul, ou avec le durcisseur ou la résine thermodurcissable ;
- éventuellement une deuxième composition comprenant le durcisseur ;
- éventuellement une troisième composition comprenant la résine thermodurcissable.

Il est également possible de prévoir un kit pour la fabrication d'un objet conforme à l'invention, comportant au moins :
- une première composition comprenant le catalyseur, seul, ou avec le durcisseur ou la résine thermodurcissable ;
- éventuellement une deuxième composition comprenant le durcisseur,
- éventuellement une troisième composition comprenant la résine thermodurcissable.

Les différentes compositions peuvent être stockées ensemble ou séparément. Il est aussi possible de stocker ensemble certaines des compositions tout en les maintenant séparées des autres compositions.

Les différentes compositions sont stockées généralement à température ambiante.

De préférence, lorsque les deuxième et troisième compositions sont toutes deux présentes dans le kit, elles sont dans un conditionnement adapté pour empêcher qu'une réaction de réticulation entre la résine thermodurcissable et le durcisseur ne se produise sans intervention d'un opérateur.

Le conditionnement peut consister en un récipient comportant deux voire trois compartiments internes permettant le stockage séparé de chacune des compositions. Selon une variante, le kit peut consister en un seul et unique récipient, contenant un mélange en quantités appropriées des deux ou trois compositions. Dans ce dernier cas, l'intervention de l'opérateur se limite avantageusement à un chauffage.

Il peut être prévu un moyen permettant la mise en contact des contenus des différents compartiments, avantageusement de façon à permettre d'initier la réticulation dans le récipient.

On peut aussi prévoir un kit consistant en plusieurs flacons distincts associés dans un même emballage et comportant chacun les quantités adaptées de chacune des compositions pour la préparation de la composition de l'invention, de façon à éviter à l'utilisateur des opérations de pesée et/ou de dosage.

### Utilisations

La composition décrite précédemment peut être utilisée pour la fabrication d'un objet en résine thermodurcie déformable à chaud.

La résine thermodurcie obtenue à partir de la composition selon l'invention est déformable à chaud.

Par déformable « à chaud », on entend à une température (T) supérieure à la température de transition vitreuse Tg de la résine thermodurcie.

La résine thermodurcie obtenue à partir de la composition selon l'invention présente avantageusement :
- une température de transition vitreuse (Tg) comprise entre 60 et 170°C, de préférence entre 80 et 150°C, plus préférentiellement entre 100 et 140°C,
- un temps de relaxation τ nécessaire pour obtenir une valeur de contrainte normalisée égale à 1/e à une température égale à Tg + 100°C et/ou à 200°C, qui est inférieur à 5000 secondes, de préférence inférieur à 2000 secondes, plus préférentiellement inférieur à 1000 secondes,
- un pourcentage de contraintes **σ** relaxées au bout de 5000 secondes à une température égale à Tg + 100°C et/ou à 200°C, qui est d'au moins 80%, de préférence d'au moins 90%, plus préférentiellement d'au moins 95%, voire de 100%,
- un module de conservation (G') au plateau caoutchoutique, par exemple à une température comprise entre 150 et 200°C, supérieur à 5 MPa, de préférence supérieur ou égal à 10 MPa, voire supérieur ou égal à 15 MPa,
ces grandeurs étant mesurées suivant les protocoles indiqués dans les exemples ci-après.

### Objets et leurs procédés de fabrication

L'invention porte également sur un objet comprenant une résine thermodurcie obtenue à partir d'au moins une composition conforme à l'invention.

Par « objet », on entend au sens de la présente invention, une pièce en trois dimensions. On inclut dans cette définition les revêtements, les films, les feuilles, les rubans, etc. Les objets selon l'invention peuvent notamment consister en des revêtements déposés sur un support, comme une couche de protection, une peinture ou encore un film adhésif. On inclut également les poudres, les granulés, etc...

L'objet selon l'invention peut être fabriqué suivant un procédé de fabrication comprenant :
a) la préparation ou la mise à disposition d'une composition conforme à l'invention,
b) la mise en forme de la composition issue de l'étape a)
c) l'application d'une énergie permettant le durcissement de la résine,
d) le refroidissement de la résine thermodurcie.

Les étapes a) b) c) du procédé peuvent être successives ou simultanées.

La préparation de la composition peut se faire dans un mélangeur de tout type connu de l'homme du métier. Elle peut notamment se faire par mise en contact des compositions décrites en relation avec le kit de manière à former une composition selon l'invention.

La mise en forme peut être effectuée par toute technique connue de l'homme du métier dans le domaine des résines thermodurcissables, notamment par moulage. Notablement, l'invention permet de prévoir également d'autres modes de mise en forme tels que le coulage, l'enroulement filamentaire, le moulage en continu ou entre pellicules, l'infusion, la pultrusion, le moulage par transfert de résine ou RTM (pour "resin transfer molding"), la réaction-injection-moulage (ou RIM) ou toutes autres méthodes connues de l'homme de l'art, telles que décrites dans les ouvrages «Epoxy Polymer», édité par J.P. Pascault et R.J.J. Williams, Wiley-VCH, Weinheim 2010 ou «Chimie industrielle », par R. Perrin et J.P. Scharff, Dunod, Paris 1999.

La mise en forme peut consister en une mise sous forme de poudre ou de grains par toute technique connue de l'homme du métier. Un broyage mécanique peut également être effectué à l'issue de l'étape d).

Pour ce qui concerne la mise en forme de la composition sous forme de revêtement, on peut avantageusement mettre en oeuvre toute méthode connue en la matière, en particulier : l'application de la composition à la brosse ou au rouleau ; le trempage d'un support à revêtir dans la composition ; l'application de la composition sous forme d'une poudre.

Si l'on essaye de mettre en forme une composition de résine thermodurcie de l'art antérieur de la même manière que décrit plus haut, le matériau ou l'objet obtenu n'est plus déformable ni réparable, ni recyclable une fois que le point de gel de la résine est atteint ou dépassé. L'application d'une température modérée à un tel objet selon l'art antérieur ne conduit à aucune transformation observable ou mesurable, et l'application d'une température très élevée conduit à la dégradation de cet objet.

Au contraire, les objets de l'invention, du fait qu'ils sont fabriqués à partir d'une composition conforme à l'invention, peuvent être déformés, soudés, réparés et recyclés par une élévation de leur température.

Par « application d'une énergie permettant le durcissement de la résine » on entend généralement une élévation de température. L'application d'une énergie permettant le durcissement de la résine peut par exemple consister en un chauffage à une température allant de 50 à 250°C, par exemple de 50 à 120°C. On peut aussi effectuer une activation par radiations, par exemple par rayons UV ou faisceau électronique, ou par voie chimique, en particulier radicalaire, par exemple au moyen de peroxydes.

Le refroidissement de la résine thermodurcie est habituellement opéré en laissant le matériau ou l'objet revenir à la température ambiante, avec ou sans utilisation d'un moyen de refroidissement.

Un objet conforme à l'invention peut être composite. Il peut notamment résulter de l'assemblage d'au moins deux objets, dont l'un au moins, et avantageusement les deux, comporte au moins une résine thermodurcie obtenue à partir d'au moins une composition conforme à l'invention.

Il s'agit par exemple d'un matériau stratifié, comportant une superposition en alternance de couches de résine thermodurcie obtenue à partir d'au moins une composition conforme à l'invention, avec des couches de bois, de métal, ou de verre.

Un objet de l'invention peut également comprendre un ou plusieurs composants additionnels choisis parmi ceux précités et en particulier: des polymères, des pigments, des colorants, des charges, des plastifiants, des fibres longues ou courtes, tissées ou non, des agents retardateurs de flamme, des agents antioxydants, des lubrifiants, du bois, du verre, des métaux. Lorsqu'un tel objet est fabriqué conformément à l'un des procédés de fabrication décrits plus haut, les composés additionnels peuvent être introduits avant, pendant ou après l'étape a).

### Procédé de déformation

Les résines thermodurcies obtenues comme décrit ici présentent l'avantage de présenter une variation lente de viscosité sur une large gamme de températures, ce qui rend le comportement d'un objet de l'invention comparable à celui des verres inorganiques et permet de leur appliquer des procédés de déformation qui ne sont généralement pas applicables aux thermodurs classiques.

Il peut ainsi être façonné en appliquant des contraintes de l'ordre de 1 à 10 MPa sans pour autant couler sous son propre poids.

De la même façon, on peut déformer cet objet à une température supérieure à la température Tg, puis dans un deuxième temps éliminer les contraintes internes à une température plus élevée.

La faible viscosité de ces objets à ces températures permet notamment l'injection ou le moulage sous presse. Il faut noter qu'aucune dépolymérisation n'est constatée à des températures élevées et les objets de l'invention conservent leur structure réticulée. Cette propriété permet la réparation d'un objet de l'invention qui se trouverait fracturé en au moins deux parties par un simple soudage de ces parties entre elles. Aucun moule n'est nécessaire pour maintenir la forme des objets de l'invention pendant le processus de réparation à des températures élevées. De la même façon, on peut transformer un objet de l'invention par application d'une contrainte mécanique à une partie seulement de l'objet sans faire appel à un moule car les objets de l'invention ne coulent pas. Toutefois, les objets de grande taille, qui ont davantage tendance à s'affaisser, pourront être maintenus par un bâti comme pour le travail du verre.

Ainsi, l'objet tel que décrit plus haut peut être déformé suivant un procédé comprenant l'application à l'objet d'une contrainte mécanique à une température (T) supérieure à la température Tg. L'assemblage, le soudage, la réparation et le recyclage constituent un cas particulier de ce procédé de déformation. De préférence, pour permettre la déformation dans une durée compatible avec une application industrielle, le procédé de déformation comprend l'application à l'objet de l'invention d'une contrainte mécanique à une température (T) supérieure à la température de transition vitreuse Tg de la résine thermodurcie qu'il contient.

Habituellement, un tel procédé de déformation est suivi d'une étape de refroidissement jusqu'à la température ambiante, éventuellement avec application d'au moins une contrainte mécanique. Par « contrainte mécanique », on entend au sens de la présente invention, l'application d'une force mécanique, localement ou sur tout ou partie de l'objet, cette force mécanique tendant à une mise en forme ou une déformation de l'objet. Parmi les contraintes mécaniques qui peuvent être employées, on peut mentionner : la pression, le moulage, le malaxage, l'extrusion, le soufflage, l'injection, l'estampage, la torsion, la flexion, la traction et le cisaillement. Il peut s'agir par exemple d'une torsion appliquée à objet de l'invention sous forme de ruban. Il peut s'agir d'une pression appliquée à l'aide d'une plaque ou d'un moule sur une ou plusieurs faces d'un objet de l'invention, de l'estampage d'un motif dans une plaque ou une feuille. Il peut encore s'agir d'une pression exercée parallèlement sur deux objets de l'invention en contact l'un avec l'autre de façon à provoquer un soudage de ces objets. Dans le cas où l'objet de l'invention consiste en des granulés, la contrainte mécanique peut consister en un malaxage, par exemple au sein d'un mélangeur ou autour de la vis d'une extrudeuse. Elle peut aussi consister en une injection ou une extrusion. La contrainte mécanique peut également consister en un soufflage, qui peut par exemple être appliqué à une feuille d'objet de l'invention. La contrainte mécanique peut également consister en une multiplicité de contraintes distinctes, de même nature ou non, appliquées de façon simultanée ou successive à tout ou partie du objet de l'invention, ou de façon localisée.

Ce procédé de déformation peut inclure une étape de mélange ou d'agglomération de l'objet de l'invention avec un ou plusieurs composants additionnels choisis parmi ceux cités précédemment et en particulier : des polymères, des pigments, des colorants, des charges, des plastifiants, des fibres longues ou courtes, tissées ou non, des agents retardateurs de flamme, des agents antioxydants, des lubrifiants.

L'élévation de la température dans le procédé de déformation peut être réalisée par tout moyen connu comme le chauffage par conduction, convection, induction, par point, infra rouge, micro-onde ou radiant. Les moyens permettant de provoquer une élévation de température pour la mise en oeuvre des procédés de l'invention comprennent : un four, un four à micro-ondes, une résistance chauffante, une flamme, une réaction chimique exothermique, un faisceau laser, un fer à repasser, un pistolet à air chaud, une cuve à ultrasons, un poinçon chauffant... L'élévation de température peut être faite par pallier ou non et sa durée est adaptée au résultat attendu.

Bien que la résine ne coule pas durant sa déformation, grâce aux réactions d'échange, en choisissant une température, une durée de chauffage et des conditions de refroidissement appropriées, la nouvelle forme peut être exempte de toute contrainte résiduelle. L'objet n'est donc pas fragilisé ou fracturé par l'application de la contrainte mécanique. Et si l'objet déformé est ultérieurement réchauffé, il ne reviendra pas à sa forme première. En effet, les réactions d'échange qui surviennent à haute température favorisent une réorganisation des points de réticulation du réseau de la résine thermodurcie de manière à annuler les contraintes mécaniques. Une durée de chauffage suffisante permet d'annuler complètement ces contraintes mécaniques internes à l'objet qui ont été causées par l'application de la contrainte mécanique externe.

Cette méthode permet donc d'obtenir des formes complexes stables, difficiles voire impossibles à obtenir par moulage, à partir de formes élémentaires plus simples. Notamment, il est très difficile d'obtenir par moulage des formes résultant d'une torsion. De façon complémentaire, le choix de conditions de température, de durée de chauffage sous contrainte et de refroidissement appropriées permet de transformer un objet de l'invention tout en contrôlant la persistance de certaines contraintes mécaniques internes au sein de ce objet, puis, si l'objet ainsi transformé est ultérieurement réchauffé, une nouvelle déformation contrôlée de ce objet par libération contrôlée des contraintes peut être opérée.

### Procédés de recyclage

L'objet obtenu selon l'invention peut également être recyclé :
- soit par traitement direct de l'objet : par exemple un objet de l'invention cassé ou endommagé est réparé par un procédé de déformation tel que décrit ci-dessus et peut ainsi retrouver sa fonction d'usage antérieure ou une autre fonction ;
- soit l'objet est réduit en particules par application d'un broyage mécanique, et les particules ainsi obtenues sont ensuite mises en oeuvre dans un procédé de fabrication d'un objet conforme à l'invention. Notamment, selon ce procédé, les particules sont soumises simultanément à une élévation de température et à une contrainte mécanique permettant leur transformation en un objet conforme à l'invention.

La contrainte mécanique permettant la transformation des particules en objet peut par exemple comporter une compression dans un moule, un malaxage, et/ou une extrusion. Cette méthode permet notamment, par l'application d'une température suffisante et d'une contrainte mécanique appropriée, de mouler de nouveaux objets à partir des objets de l'invention.

Un autre avantage de l'invention est de permettre de fabriquer des objets à base de résine thermodurcie à partir de matières premières solides. Ces matières premières solides sont ainsi des objets selon l'invention sous forme de pièces, d'une unité élémentaire ou d'un ensemble d'unités élémentaires.

Par « unités élémentaires », on entend des pièces qui ont une forme et/ou un aspect adaptée à leur transformation ultérieure en objet, comme par exemple : particules, granulés, billes, bâtonnets, plaques, feuilles, films, rubans, tiges, tubes etc....

Par « ensemble d'unités élémentaires », on entend au moins 2 unités élémentaire, par exemple au moins 3, au moins 5, au moins 10, voire au moins 100 unités élémentaires.

Tout procédé connu de l'homme du métier peut être employé à cette fin. Ces pièces élémentaires sont ensuite transformables, sous l'action conjointe de la chaleur et d'une contrainte mécanique, en des objets de la forme souhaitée : par exemple, des rubans peuvent par estampage être découpés en pièces plus petites de forme choisie, des feuilles peuvent être superposées et assemblées par compression. Ces pièces élémentaires à base de résine thermodurcie sont plus facilement stockables, transportables et manipulables que les formulations liquides dont elles sont issues. En effet, l'étape de transformation des pièces élémentaires conforme à l'invention peut être réalisée par l'utilisateur final sans équipement de chimie (non toxicité, pas de date de péremption, pas de COV, pas de pesée de réactifs).

Un cas particulier du procédé de déformation déjà décrit comprend ainsi :
a) l'utilisation comme matière première d'un objet de l'invention sous forme d'une unité élémentaire ou d'un ensemble d'unités élémentaires,
b) l'application simultanée d'une contrainte mécanique et d'une élévation de température pour mettre en forme l'objet pour former un nouvel objet,
c) le refroidissement de l'objet résultant de l'étape b).

Un autre avantage de ce procédé est de permettre le recyclage du nouvel objet fabriqué, celui-ci pouvant être reconditionné sous forme d'unités ou pièces élémentaires qui peuvent à leur tour être remises en forme, conformément à l'invention.

Le procédé de recyclage d'un objet de l'invention peut comprendre :
a) l'utilisation d'un objet de l'invention comme matière première,
b) l'application d'une contrainte mécanique et éventuellement d'une élévation de température simultanée pour transformer cet objet en un ensemble d'unités élémentaires,
c) le refroidissement de cet ensemble d'unités élémentaires.

### Applications

Les domaines d'application de la présente invention sont principalement ceux des résines thermodurcissables, en particulier ceux des résines époxy, notamment l'automobile (ce qui regroupe tout type de véhicule motorisé y compris les poids-lourds), l'aéronautique, le nautisme, l'aérospatiale, le sport, le bâtiment, l'électrique, l'isolation électrique, l'électronique, l'éolien, l'emballage et l'imprimerie.

Les compositions, matériaux et objets de l'invention peuvent par exemple être incorporés dans des formulations, notamment avec des additifs typiques tels que des charges, des antioxydants, des retardateurs de flamme, des protecteurs UV, des pigments, des colorants. Les formulations peuvent par exemple servir au couchage du papier, à la fabrication d'encres, de peintures. Les matériaux ou objets de l'invention peuvent être utilisés sous forme de poudres, de granulés, ou encore être incorporés dans des matériaux composites, en particulier ceux comportant des fibres de verre, de carbone, d'aramide, ou d'origine végétale (fibres de lin, de chanvre,...). Ces fibres peuvent être des fibres longues ou des fibres courtes, tissées ou non. Les compositions de l'invention peuvent aussi être appliquées comme revêtements, par exemple comme vernis de protection des métaux, protection de tuyaux, protections de sols.

Les compositions de l'invention peuvent encore servir à fabriquer des adhésifs, avantageusement ceux thermoréticulables ou photoréticulables, à encapsuler des connecteurs (la composition de l'invention pouvant être appliquée par potting ou injection), à réaliser des pièces d'isolateurs électriques ou encore à réaliser des prototypes.

### EXEMPLES

Les exemples suivants illustrent l'invention sans la limiter.

### Méthodes de caractérisation

Analyse mécanique : les échantillons des exemples 1 à 4 ont été soumis à une analyse mécanique dynamique (DMA) Précisément, un barreau de dimensions 10x30x3mm a été fixé entre deux pinces et sollicité en torsion rectangulaire (déformation imposée de 0,05%) dans un appareil RDA3 de RHEOMETRIC SCIENTIFIC, avec une fréquence de 1 Hz, en effectuant un balayage en température de 25 à 250°C avec une rampe de température de 3°C/min. La valeur de Tα a été déterminée au sommet du pic de la courbe de tan8, et est considérée ci-après comme la Tg de l'échantillon, tandis que le module de conservation G' a été déterminé sur le plateau caoutchoutique à 200°C.

### Exemple 1 : Synthèse d'un réseau époxy-anhydride en présence de 1% de catalyseur

### organique

On a préparé quatre échantillons de matériau vitrimère (respectivement 1a, 1b, 1c et 1d) en présence de 1% de TBD, suivant la méthode suivante.

Dans un bêcher ont été ajoutés une résine époxy de type DGEBA (DER332 de DOW, Masse Epoxy Equivalente : 174g/eq) sous forme de liquide visqueux, ainsi que du TBD (ALDRICH) à raison de 1% molaire de catalyseur par mole de fonctions époxyde. Le bêcher a été placé dans un bain d'huile thermostaté à 100-120°C jusqu'à dissolution du catalyseur dans la résine pour obtenir un mélange homogène et transparent. On a alors ajouté à ce mélange, hors du bain, de l'anhydride méthyl tétrahydrophthalique (MTHPA) (MW = 166,18g/mol) puis l'ensemble a été homogénéisé quelques minutes dans le bain avant d'être coulé dans un moule métallique creux de 70x140x3mm légèrement siliconé. Le moule a été solidarisé par un joint en silicone à une plaque métallique recouverte d'un revêtement en Teflon, puis l'ensemble a été introduit dans une presse chauffante préalablement réglée à une température de 140°C et placée en début de cuisson à une pression de 10 bars. La cuisson a été effectuée pendant 17 heures.

Pour fabriquer ces échantillons, on a utilisé un ratio molaire des fonctions époxyde de la résine aux fonctions anhydride du durcisseur respectivement égal à 1/0,5 ; 1/0,8 ; 1/1 ; et 1/0,8 pour les échantillons 1a, 1b, 1c et 1d.

On a mesuré la Tg et le module de conservation des matériaux ainsi obtenus.

Ces matériaux présentaient respectivement une Tg de 130°C, 148°C, 148°C et 114°C et un module de conservation à 200°C de 15 MPa, 14 MPa,15 MPa et 7,5 MPa.

Deux échantillons de matériau vitrimère ont été préparés de manière identique, en remplaçant le TDB par le DBU (1,8-DiazaBicyclo[5.4.0]Undéc-7-ène), ou le DOTG (DiOrthoToluidineGuanidine), pour un ratio molaire des fonctions époxyde de la résine aux fonctions anhydride du durcisseur égal à 1/1. Ces matériaux présentaient respectivement une Tg de 132°C et 125°C et un module de conservation à 200°C de 14 MPa et 10 MPa.

### Exemple comparatif 2 : Synthèse d'un réseau époxy-anhydride en présence de 10% d'acétylacétonate de zinc

Trois échantillons de matériau (respectivement 2a, 2b et 2c) ont été préparés de manière identique à l'exemple 1, excepté que le catalyseur était remplacé par l'acétylacétonate de zinc ou Zn(acac)₂ à une teneur de 10% mol de Zn par rapport aux fonctions époxy.

Ces matériaux présentaient, respectivement, une Tg de 124°C, 142°C et 130°C et un module de conservation à 200°C de 14,3 MPa, 14,5 MPa et 13,5 MPa.

### Exemple comparatif 3 : Synthèse d'un réseau époxy-anhydride en présence de catalyseurs azotés

On a préparé cinq échantillons 3a à 3e de matériau de manière identique à l'exemple 1, en utilisant des quantités variables de différents catalyseurs azotés d'ouverture d'époxyde ne répondant pas à la formule (I) décrite ici, à savoir : la méthyl imidazolidone (ou 2-MIA), le 2,4,6-tri(diméthylaminométhyl) phénol (ci-après, "Anc" pour Ancamine K54 d'AIR PRODUCTS) et le 1,4-diazabicyclooctane (ou DABCO). Le ratio molaire des fonctions époxyde de la résine aux fonctions anhydride du durcisseur était fixé à 1/0,8. Les caractéristiques de ces matériaux sont rassemblées dans le Tableau 1 suivant.

**Tableau 1**

| | 3a | 3b | 3c | 3d | 3e |
|---|---|---|---|---|---|
| Catalyseur | 2-MIA | Anc | DABCO | DABCO | DABCO |
| catalyseur/époxyde (% mol) | 2,5 | 2 | 1 | 5 | 10 |
| G' (MPa) | 15 | 10 | 7 | 11 | 10 |
| Tg (°C) | 144 | 130 | 110 | 130 | 130 |

### Exemple 4 : Synthèse d'un réseau époxy-anhydride en présence de TBD et de polyol

On a préparé trois échantillons de manière identique à l'échantillon 1b de l'exemple 1, excepté qu'un polyol a été ajouté sous forme liquide au durcisseur à température ambiante. On a mesuré la Tg et le module de conservation G' des matériaux ainsi obtenus, qui sont rassemblés dans le Tableau 2 ci-dessous.

**Tableau 2**

| Ech. | 4a | 4b | 4c |
|---|---|---|---|
| Polyol | Glycérol | Glycérol | TMP* |
| %mol _{OH/epoxy} | 10 | 20 | 10 |
| Tg(°C) | 146 | 144 | 144 |
| G' (MPa) | 15 | 15 | 16,7 |

| | | | |
|---|---|---|---|
| * triméthylol propane | | | |

### Exemple 5 : Etude des propriétés vitrimères de différents matériaux

Les échantillons des Exemples 1 à 4 ont été soumis à une expérience consistant à imposer à une éprouvette de matériau de 40x20x2mm une déformation sous flux d'azote, en flexion 3 points, à l'aide d'un appareil Metravib de type DMA50N, après que l'échantillon ait été porté à une température égale à Tg + 100°C ou à 200°C, et stabilisé pendant 5 min à cette température. L'évolution des contraintes induites dans le matériau pour maintenir la déformation constante est suivie pendant 5000 secondes et mesurée à l'aide d'un capteur. On impose ensuite à l'échantillon une force égale à zéro et on mesure la déformation (recouvrance) de l'échantillon pendant 5000 secondes supplémentaires. Lorsque le matériau conserve la déformation qui lui a été imposée, on considère que toutes les contraintes ont été relaxées. On trace ensuite la contrainte normalisée (σ/σo) en fonction du temps et on relève, pour chaque essai, le temps de relaxation τ nécessaire pour obtenir une valeur de contrainte normalisée égale à 1/e, ainsi que le pourcentage de contraintes relaxées à 5000 secondes désigné ci-après par σ₅₀₀₀ₛ.

Les résultats obtenus sont rassemblés dans le Tableau 3 ci-dessous.

Comme il ressort de ce tableau, les catalyseurs selon l'invention (échantillons la à 1d) permettent d'obtenir des matériaux capables de relaxer leurs contraintes de manière plus complète, et généralement plus rapide, que les matériaux obtenus à partir de catalyseur à base d'acétylacétonate de zinc à uns teneur de 10% (échantillons 2a à 2c). Ces propriétés vitriméres peuvent encore être améliorées en ajoutant un polyol au mélange de réactifs (exemples 4a à 4c). Par ailleurs, elles ne sont pas obtenues au détriment des propriétés mécaniques du matériau, qui présente un module de conservation (G') au plateau caoutchoutique supérieur ou égal à 5 MPa (voir l'Exemple 1).

En revanche, les matériaux des exemples 3a à 3e ne présentent pas de propriétés vitriméres, sauf à utiliser un taux de catalyseur très élevé (exemple 3e). Même dans ce cas, les propriétés obtenues restent médiocres.

**Tableau 3**

| Ech. | 1a | 1b | 1c | 1d | 2a (comp) | 2b (comp) | 2c |
|---|---|---|---|---|---|---|---|
| τ (s) | 345 | 1015 | 1655 | 1555 | 1600 | 2400 | 1565 |
| σ₅₀₀₀ₛ (%) | 96 | 100 | 100 | 93 | 100 | 87 | 84 |

| Ech. | 3a (comp) | 3b (comp) | 3c (comp) | 3d (comp) | 3e (comp) | | |
|---|---|---|---|---|---|---|---|
| τ (s) | >5000 | >5000 | >5000 | >5000 | 2350 | | |
| σ₅₀₀₀ₛ (%) | 0 | 0 | 28 | 54 | 82 | | |

| Ech. | 4a | 4b | 4c | | | | |
|---|---|---|---|---|---|---|---|
| τ (s) | 385 | 315 | 670 | | | | |
| σ₅₀₀₀ₛ (%) | 100 | 100 | 93 | | | | |

### Exemple 6: Etude de la stabilité thermique de différents matériaux vitrimères

On a évalué la stabilité thermique d'un matériau identique à celui de l'exemple 1b, excepté qu'il était obtenu en utilisant une quantité de catalyseur égale à 0,5% molaire par rapport au nombre de moles de fonctions époxyde dans la résine (ci-après, exemple 1d). Les résultats ont été comparés à ceux obtenus avec le matériau de l'exemple comparatif 2b. La mesure a été effectuée par ATG sur un appareil Perkin Elmer de type TGA7, en effectuant un balayage de températures de 25°C à 500°C suivant une rampe de 10°C/min. La température conduisant à une perte de matière de 1% était de 176°C dans le cas du matériau de l'Exemple comparatif 2b et de 305°C dans le cas du matériau de l'Exemple 1d. En outre, la perte de matériau après 1h à 250°C s'élevait à 8,4% dans le cas du matériau de l'exemple comparatif 2b et à 1,5% seulement dans le cas du matériau de l'exemple 1d. Ces résultats confirment la meilleure tenue thermique des matériaux selon l'invention aux températures de remise en forme et de recyclage.

Les essais réalisés sur les matériaux obtenus à l'exemple 1 avec le DBU et le DOTG ont montré que la température conduisant à une perte de matière de 1% était respectivement de 315°C et 295°C, et la perte de matériau après 1h à 250°C s'élevait à 4,1% pour le DBU.

## Revendications

1. Composition comprenant :
- un catalyseur comprenant, et de préférence constitué par, un composé de formule (I) : 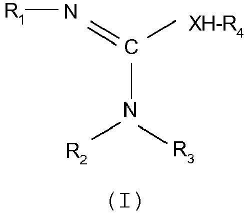 dans laquelle :
X désigne un atome d'azote ou un groupe -CH-,
R₁ désigne un atome d'hydrogène, un groupe alkyle en C₁-C₆ ou un groupe phényle pouvant être substitués par un groupe alkyle en C₁-C₄,
R₂, R₃ et R₄ désignent indépendamment un atome d'hydrogène, un groupe alkyle en C₁-C₆, ou un groupe phényle pouvant être substitués par un groupe alkyle en C₁-C₄, ou un groupe acétyle,
ou R₁ et R₂ forment ensemble et avec les atomes auxquels ils sont liés un hétérocycle saturé ou insaturé et/ou R₃ et R₄ forment ensemble et avec les atomes auxquels ils sont liés un hétérocycle saturé ou insaturé,
- une résine thermodurcissable comprenant au moins une et avantageusement plusieurs fonctions époxyde et optionnellement au moins une et avantageusement plusieurs fonctions hydroxyle libre et/ou ester, et
- un durcisseur de résine thermodurcissable choisi parmi les anhydrides d'acide carboxylique.

2. Composition selon la revendication 1, **caractérisée en ce que** R₁ et R₂ forment ensemble et avec les atomes auxquels ils sont liés un hétérocycle saturé ou insaturé, de préférence insaturé, et **en ce que** R₃ et R₄ forment ensemble et avec les atomes auxquels ils sont liés un hétérocycle saturé ou insaturé, de préférence saturé.

3. Composition selon la revendication 1 ou 2, **caractérisée en ce que** le catalyseur est le triazabicyclodécène (TBD).

4. Composition selon l'une quelconque des revendications 1 à 3, **caractérisée en ce que** le catalyseur représente de 0,1 à moins de 5% en mol, de préférence de 0,1 à 4% en mol, plus préférentiellement de 0,5 à 2% en mol, relativement à la quantité molaire de fonctions époxy contenues dans ladite résine thermodurcissable.

5. Composition selon l'une quelconque des revendications 1 à 4, **caractérisée en ce que** la résine thermodurcissable est un diglycidyl éther de bisphénol A (DGEBA).

6. Composition selon l'une quelconque des revendications précédentes, **caractérisée en ce que** la quantité de durcisseur est telle que le nombre de moles de fonctions époxydes de la résine peut aller de 50 à 300%, de préférence de 100% à 200%, de préférence de 125 à 150 %, relativement au nombre de moles de fonctions anhydride du durcisseur.

7. Composition selon l'une quelconque des revendications précédentes, **caractérisée en ce que** la teneur en résine thermodurcissable et en durcisseur va de 10% à 90 % en poids, notamment de 20 % à 80 % en poids voire de 30 à 70 % en poids, relativement au poids total de la composition, le complément à 100 % étant apporté par le catalyseur et éventuellement par des composés additionnels choisis parmi : des polymères, des pigments, des colorants, des charges, des plastifiants, des fibres longues ou courtes, tissées ou non, des agents retardateurs de flamme, des agents antioxydants, des lubrifiants, du bois, du verre, des métaux et leurs mélanges.

8. Composition selon l'une quelconque des revendications précédentes, comprenant en outre au moins un polyol.

9. Composition selon la revendication 8 **caractérisée en ce que** le polyol est le glycérol, le triméthylolpropane ou le pentaérythritol.

10. Kit pour la fabrication d'une composition selon l'une quelconque des revendications précédentes, comportant au moins :
- une première composition comprenant le catalyseur, seul ou avec le durcisseur ou la résine thermodurcissable ;
- éventuellement une deuxième composition comprenant le durcisseur ;
- éventuellement une troisième composition comprenant la résine thermodurcissable.

11. Utilisation de la composition selon l'une quelconque des revendications 1 à 9 pour la fabrication d'un objet en résine thermodurcie déformable à chaud.

12. Objet comprenant une résine thermodurcie obtenue à partir d'une composition telle que définie dans l'une quelconque des revendications 1 à 9.

13. Procédé de déformation d'un objet, tel qu'un procédé d'assemblage, de soudage, de réparation ou de recyclage, comprenant l'application à un objet conforme à la revendication 12 d'une contrainte mécanique à une température (T) supérieure à la température de transition vitreuse Tg de la résine thermodurcie.

14. Utilisation d'un ou plusieurs objets conformes à la revendication 12 dans les domaines de l'automobile, l'aéronautique, le nautisme, l'aérospatiale, le sport, le bâtiment, l'électrique, l'isolation électrique, l'électronique, l'éolien, l'emballage ou l'imprimerie.

## Patentansprüche

1. Zusammensetzung, umfassend:
- einen Katalysator, der eine Verbindung der Formel (I) umfasst und vorzugsweise daraus besteht: 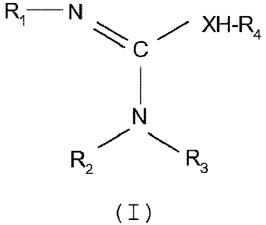 wobei:
X für ein Stickstoffatom oder eine -CH-Gruppe steht,
R₁ für ein Wasserstoffatom, eine C₁-C₆-Alkylgruppe oder eine Phenylgruppe, die durch eine C₁-C₄-Alkylgruppe substituiert sein kann, steht, R₂, R₃ und R₄ unabhängig für ein Wasserstoffatom, eine C₁-C₆-Alkylgruppe oder eine Phenylgruppe, die durch eine C₁-C₄-Alkylgruppe substituiert sein kann, oder eine Acetylgruppe stehen,
oder R₁ und R₂ zusammen und mit den Atomen, an die sie gebunden sind, einen gesättigten oder ungesättigten Heterocyclus bilden und/oder R₃ und R₄ zusammen und mit den Atomen, an die sie gebunden sind, einen gesättigten oder ungesättigten Heterocyclus bilden,
- ein warmhärtbares Harz, das mindestens eine und vorteilhafterweise mehrere Epoxidfunktionen und gegebenenfalls mindestens eine und vorteilhafterweise mehrere freie Hydroxyl- und/oder Esterfunktionen umfasst, und
- einen Härter für das warmhärtbare Harz, der aus Carbonsäureanhydriden ausgewählt ist.

2. Zusammensetzung nach Anspruch 1, **dadurch gekennzeichnet, dass** R₁ und R₂ zusammen und mit den Atomen, an die sie gebunden sind, einen gesättigten oder ungesättigten, vorzugsweise ungesättigten, Heterocyclus bilden und dass R₃ und R₄ zusammen und mit den Atomen, an die sie gebunden sind, einen gesättigten oder ungesättigten, vorzugsweise gesättigten, Heterocyclus bilden.

3. Zusammensetzung nach Anspruch 1 oder 2, **dadurch gekennzeichnet, dass** es sich bei dem Katalysator um Triazabicyclodecen (TBD) handelt.

4. Zusammensetzung nach einem der Ansprüche 1 bis 3, **dadurch gekennzeichnet, dass** der Katalysator 0,1 bis weniger als 5 Mol-%, vorzugsweise 0,1 bis 4 Mol-%, weiter bevorzugt 0,5 bis 2 Mol-%, bezogen auf die molare Menge von Epoxidfunktionen, die in dem warmhärtbaren Harz enthalten sind, ausmacht.

5. Zusammensetzung nach einem der Ansprüche 1 bis 4, **dadurch gekennzeichnet, dass** es sich bei dem warmhärtbaren Harz um einen Bisphenol-A-diglycidylether (BADGE) handelt.

6. Zusammensetzung nach einem der vorhergehenden Ansprüche, **dadurch gekennzeichnet, dass** die Menge an Härter so beschaffen ist, dass die Zahl der Mole von Epoxidfunktionen des Harzes im Bereich von 50 bis 300 %, vorzugsweise 100 bis 200 %, vorzugsweise 125 bis 150 %, bezogen auf die Zahl der Mole an Anhydridfunktionen des Härters, liegen kann.

7. Zusammensetzung nach einem der vorhergehenden Ansprüche, **dadurch gekennzeichnet, dass** der Gehalt an warmhärtbarem Harz und an Härter im Bereich von 10 bis 90 Gew.-%, insbesondere von 20 bis 80 Gew.- % oder sogar von 30 bis 70 Gew.-%, bezogen auf das Gesamtgewicht der Zusammensetzung, liegt, wobei der Rest auf 100 % durch den Katalysator und gegebenenfalls durch zusätzliche Verbindungen, die aus Polymeren, Pigmenten, Farbmitteln, Füllstoffen, Weichmachern, langen oder kurzen Web- oder Vliesstofffasern, Flammschutzmitteln, Antioxidantien, Schmiermitteln, Holz, Glas, Metallen und Mischungen davon ausgewählt sind, beigesteuert wird.

8. Zusammensetzung nach einem der vorhergehenden Ansprüche, die außerdem mindestens ein Polyol umfasst.

9. Zusammensetzung nach Anspruch 8, **dadurch gekennzeichnet, dass** es sich bei dem Polyol um Glycerin, Trimethylolpropan oder Pentaerythritol handelt.

10. Kit zur Herstellung einer Zusammensetzung nach einem der vorhergehenden Ansprüche, mindestens umfassend:
- eine erste Zusammensetzung, die den Katalysator alleine oder mit dem Härter oder dem warmhärtbaren Harz umfasst;
- gegebenenfalls eine zweite Zusammensetzung, die den Härter umfasst;
- gegebenenfalls eine dritte Zusammensetzung, die das warmhärtbare Harz umfasst.

11. Verwendung der Zusammensetzung nach einem der Ansprüche 1 bis 9 zur Herstellung eines Gegenstands aus einem duroplastischen Harz, das in der Wärme verformbar ist.

12. Gegenstand, umfassend ein duroplastisches Harz, erhalten aus einer Zusammensetzung gemäß einem der Ansprüche 1 bis 9.

13. Verfahren zum Verformen eines Gegenstands, wie ein Montage-, Schweiß-, Reparatur- oder Recyclingverfahren, umfassend das Anwenden einer mechanischen Belastung auf einen Gegenstand gemäß Anspruch 12 bei einer Temperatur (T) oberhalb der Glasübergangstemperatur Tg des duroplastischen Harzes.

14. Verwendung eines oder mehrerer Gegenstände gemäß Anspruch 12 im Automobil-, Luftfahrt-, Marine-, Raumfahrt-, Sport-, Bau-, Elektro-, Elektroisolations-, Elektronik-, Windkraft-, Verpackungs- oder Drucksektor.

## Claims

1. Composition comprising:
- a catalyst comprising, and preferably consisting of, a compound of formula (I): 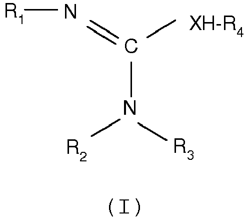 in which:
X denotes a nitrogen atom or a -CH- group,
R₁ denotes a hydrogen atom or a C₁-C₆ alkyl group or a phenyl group that can be substituted with a C₁-C₄ alkyl group,
R₂, R₃ and R₄ independently denote a hydrogen atom, a C₁-C₆ alkyl group, or a phenyl group that can be substituted with a C₁-C₄ alkyl group, or an acetyl group,
or R₁ and R₂ form, together and with the atoms to which they are bonded, a saturated or unsaturated heterocycle and/or R₃ and R₄ form, together and with the atoms to which they are bonded, a saturated or unsaturated heterocycle,
- a thermosetting resin comprising at least one and advantageously several epoxide functions and optionally at least one and advantageously several free hydroxyl and/or ester functions, and
- a thermosetting-resin curing agent chosen from carboxylic acid anhydrides.

2. Composition according to Claim 1, **characterized in that** R₁ and R₂ form, together and with the atoms to which they are bonded, a saturated or unsaturated, preferably unsaturated, heterocycle, and **in that** R₃ and R₄ form, together and with the atoms to which they are bonded, a saturated or unsaturated, preferably saturated, heterocycle.

3. Composition according to Claim 1 or 2, **characterized in that** the catalyst is triazabicyclodecene (TBD).

4. Composition according to any one of Claims 1 to 3, **characterized in that** the catalyst represents from 0.1 to less than 5 mol%, preferably from 0.1 to 4 mol%, more preferentially from 0.5 to 2 mol%, relative to the molar amount of epoxy functions contained in said thermosetting resin.

5. Composition according to any one of Claims 1 to 4, **characterized in that** the thermosetting resin is bisphenol A diglycidyl ether (DGEBA).

6. Composition according to any one of the preceding claims, **characterized in that** the amount of curing agent is such that the number of moles of epoxide functions of the resin can range from 50% to 300%, preferably from 100% to 200%, preferably from 125% to 150%, relative to the number of moles of anhydride functions of the curing agent.

7. Composition according to any one of the preceding claims, **characterized in that** the content of thermosetting resin and of curing agent ranges from 10% to 90% by weight, in particular from 20% to 80% by weight or even from 30% to 70% by weight, relative to the total weight of the composition, the remainder to 100% being provided by the catalyst and optionally by additional compounds chosen from: polymers, pigments, dyes, fillers, plasticizers, long or short, woven or nonwoven fibres, flame retardants, antioxidants, lubricants, wood, glass, metals, and mixtures thereof.

8. Composition according to any one of the preceding claims, also comprising at least one polyol.

9. Composition according to Claim 8, **characterized in that** the polyol is glycerol, trimethylolpropane or pentaerythritol.

10. Kit for producing a composition according to any one of the preceding claims, comprising at least:
- a first composition comprising the catalyst, alone or with the curing agent or the thermosetting resin;
- optionally a second composition comprising the curing agent;
- optionally a third composition comprising the thermosetting resin.

11. Use of the composition according to any one of Claims 1 to 9, for producing an object made of thermoset resin that is hot-deformable.

12. Object comprising a thermoset resin obtained from a composition as defined in any one of Claims 1 to 9.

13. Process for deforming an object, such as an assembly, welding, repairing or recycling process, comprising the application, to an object in accordance with Claim 12, of a mechanical stress at a temperature (T) above the glass transition temperature Tg of the thermoset resin.

14. Use of one or more objects in accordance with Claim 12 in the motor vehicle, aeronautical, nautical, aerospace, sport, construction, electrical, electrical insulation, electronics, wind power, packaging or printing fields.
